# DEMANDE DE BREVET EUROPEEN

(11) **EP 0 589 801 A1**
(43) Date de publication de la demande: **30.03.1994**
(21) Numéro de dépôt: 93402340.9
(22) Date de dépôt: 24.09.1993
(51) Int. Cl.: A47C 31/10, B60N 2/44

(54) **Housse en tissu pour siège, notamment automobile**

(30) Priorité: 25.09.1992 FR 9211472
(71) Demandeur: CUSTOMAGIC EUROPE S.A., F-59250 Halluin (FR)
(72) Inventeur: Cajetan, Jean-Paul, F-59236 Frelinghein (FR)
(74) Mandataire: Wagret, Frédéric

(57) **Abrégé**

Housse en tissu pour siège, en forme générale de poche rectangulaire, comprenant deux panneaux parallèles (5,6) reliés sur trois côtés, un premier côté formant le fond (9) de ladite poche, un second et troisième côté formant les deux flancs (7,8) latéraux de la housse, le quatrième côté définissant une ouverture (10) par laquelle la housse est susceptible d'être enfilée sur le siège, caractérisée en ce qu'elle est pourvue de moyens élastiques de fronçage (11,12,13) au niveau desdits flancs latéraux (7,8), et en ce que ledit tissu présente des propriétés élastiques réduites.

## Description

La présente invention concerne une housse en tissu destinée à être enfilée et couvrir un siège. L'invention est plus particulièrement destinée à des housses pour siège présentant un dossier d'une part et une assise d'autre part, et présentant une dimension dans le sens transversal au plan du dossier ou du bas, c'est-à-dire en épaisseur, non négligeable par rapport aux dimensions du siège ou du bas dans leur plan. Des sièges de ce type sont communément utilisés dans les véhicules, notamment automobiles, et également dans le domaine de l'ameublement, fauteuils et canapés par exemple.

On sait que le but d'une housse, notamment dans son application au revêtement d'un siège d'automobile, est de protéger ledit siège. Ces housses sont vendues directement au particulier qui les enfile lui-même sur le siège. Afin d'éviter d'avoir à fabriquer un trop grand nombre de housses différentes, destinées à s'adapter à chaque type d'automobile, les constructeurs de housse proposent leur produit sous forme de taille unique ou quelques tailles, qui sont censées s'adapter sur l'ensemble des sièges du parc automobile existant.

Les housses proposées au particulier doivent pouvoir être associées à un grand nombre de sièges différent pour une même housse, et ce dans des conditions de finition adéquate, notamment sans présenter de pli ou déformation inesthétiques d'une part, et nuisibles à la bonne tenue de la housse sur le siège d'autre part.

De plus, les housses doivent pouvoir être enfilées ou installées sur les sièges de façon aisée, sans que l'utilisateur ait besoin de recourir à des réglages multiples et fastidieux.

A ce jour, les housses connues, dans le but de répondre aux exigences rappelées ci-dessus, sont réalisées en tissu présentant des caractéristiques élastiques importantes.

Si cette caractéristique répond plus ou moins à la condition d'adaptation à des sièges de tailles variées, l'habillage en revanche, ne permet pas d'obtenir une finition satisfaisante. En effet, le siège présente, une fois habillé, des déformations dues soit au décalage entre le devant et le dos du siège, soit un décalage provenant d'une mauvaise adaptation de la housse à des sièges de tailles différentes.

On a tenté de remédier à ces inconvénients, de façon connue, en prévoyant sur la face de la housse correspondant au dos du siège, des fronces. Ces fronces, outre leur caractère inesthétique, ne répondent que partiellement au but qui leur est assigné et en conséquence ne permettent pas une adaptation parfaite de la housse à différentes tailles de siège d'une part, et n'évitent pas toujours le décalage entre le dos et le devant du siège.

Ceci représente un inconvénient majeur dans la mesure où les housses sont destinées à recouvrir des sièges dans un but, non seulement de protection, mais également esthétique. Des plis ou des housses présentant une déformation visible nuisent à l'aspect décoratif et esthétique de l'ensemble de l'habitat du véhicule.

La présente invention remédie à ces inconvénients et propose une housse en tissu pour siège notamment de véhicule automobile susceptible d'être disposée sur des sièges de dimension susceptible de varier dans une grande gamme, et à la fois présentant des caractéristiques de finition, une fois installée sur le siège, répondant aux exigences des utilisateurs, notamment sur le plan esthétique.

A cette fin, selon l'invention, la housse en tissu pour siège, en forme générale de poche rectangulaire, comprenant deux panneaux parallèles reliés sur trois côtés, un premier côté formant le fond de ladite poche, un second et troisième côté formant les deux flancs latéraux de la housse, le quatrième côté définissant une ouverture par laquelle la housse est susceptible d'être enfilée sur le siège, est caractérisée en ce qu'elle est pourvue de moyens élastiques de fronçage au niveau desdits flancs latéraux, et en ce que ledit tissu présente des propriétés élastiques réduites.

L'invention sera bien comprise à la lumière du dessin annexé, dans lequel:
- la figure 1 représente un siège pour véhicule automobile revêtu de la housse selon l'invention;
- la figure 2 montre schématiquement la housse selon l'invention hors du siège;
- les figures 3A à 3E montrent en perspective des sièges avant de véhicules pourvus de housse selon l'invention; et
- les figures 4A à 4D montrent en perspective chacune un fauteuil et un divan de même style, et pourvus d'une housse selon l'invention.

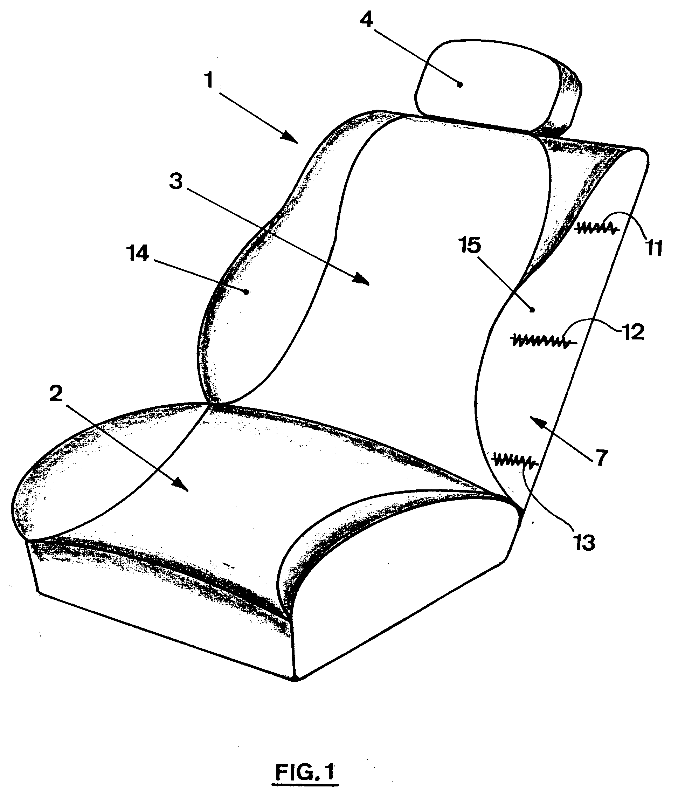

Le siège 1 représenté sur la figure 1 comporte un bas 2 et un dossier 3, ainsi qu'un appui-tête 4 disposé au sommet du dossier 3.

Le bas 2 et le dossier 3 sont recouverts chacun d'une housse selon l'invention.

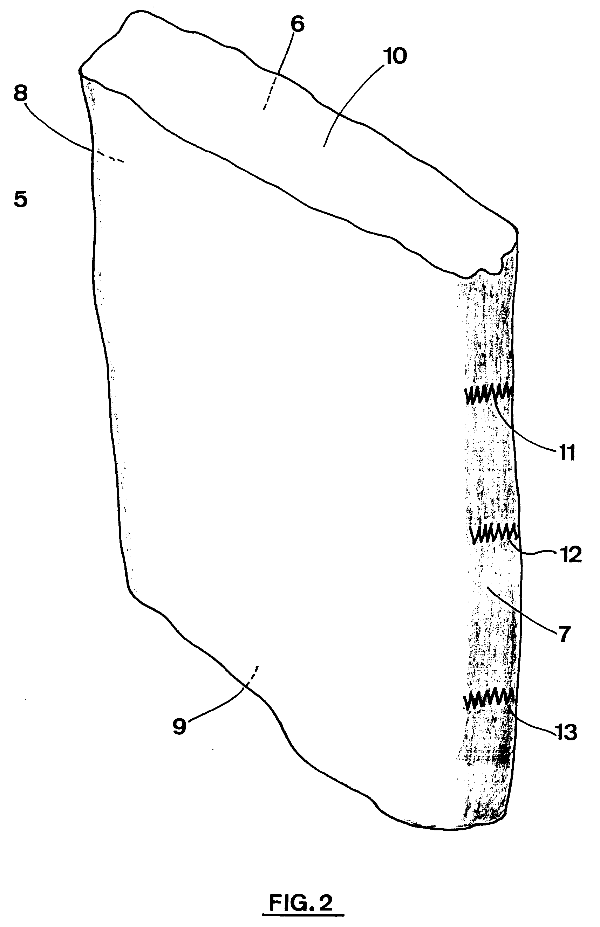

La housse est représentée schématiquement sur la figure 2 et comprend un panneau avant 5, un panneau arrière 6, parallèles entre eux et reliés par des flancs latéraux 7 et 8. La housse présente la forme générale d'une poche pourvue d'un fond 9 et d'une ouverture, disposée sur le côté opposé au fond 9, et référencée 10. A noter que, pour la clarté du dessin, le bord de l'ouverture 10 est muni d'une bande élastique de serrage non représentée. La housse est enfilée sur le dossier 3 par ladite ouverture 10.

La housse est réalisée en un tissu non extensible, ou à tout le moins, présentant des caractéristiques d'élasticité réduites.

Sur les flancs 7 et 8 sont prévues des fronces 11, 12, 13, disposées sensiblement parallèlement au plan de l'ouverture 10 et sensiblement transversalement au plan des faces avant et arrière respectivement 5 et 6.

Seules les fronces prévues sur le flanc 7 ont été représentées, mais il est évident que le flanc opposé portant la référence 8 comporte un nombre égal de fronces disposées sensiblement au même niveau. Les fronces du côté du flanc 8 n'ont pas été représentées pour des raisons de clarté du dessin.

Les fronces 11, 12 et 13 sont associées à des bandes élastiques. Les fronces sont disposées en nombre tel qu'elles permettent, une fois la housse en place sur le siège (voir figure 1), une répartition des efforts de tension sur le tissu, afin que celui-ci s'adapte aux dimensions du siège. De préférence, les fronces sont régulièrement espacées sur la hauteur du plan, c'est-à-dire entre l'ouverture 10 et le fond 9. A titre d'exemple, pour une housse de la dimension de 60 cms, le nombre de fronces optimal est de 3 à 4 suivant la forme de l'objet à habiller.

Le fond 9 peut être pourvu d'une poche supplémentaire destinée à recouvrir l'appui-tête 4. Alternativement, l'appui-tête 4 peut être recouvert d'une housse qui lui est propre, et indépendante de la housse qui est destinée à recouvrir le dossier.

Il est à noter que, grâce aux dispositions de l'invention, la housse est susceptible de recouvrir des sièges de taille variant dans une large mesure. Egalement, la housse selon l'invention permet, pour un siège de taille et dimension données, de s'adapter à différentes formes de siège. Plus particulièrement, à titre d'exemple, la figure 1 montre un siège dont le dossier 3 comporte des rembourrages latéraux 14 et 15 faisant saillie par rapport au plan du dossier 3. Le tissu constituant la housse n'étant pas extensible, les différences de taille et de forme sont reprises par les fronces 11, 12, 13 munies de bandes élastiques. L'élongation maximale des bandes élastiques est telle qu'elle soit susceptible d'adapter la housse à des sièges dont les dimensions varient dans une large mesure.

Le siège 1 peut être recouvert entièrement par une seule housse, c'est-à-dire une housse unique pour le bas 2 et le dossier 3, la housse unique étant constituée de deux poches similaires à celles montrées sur la figure 2 et reliées par le bord de la face avant disposée du côté de l'ouverture 10.

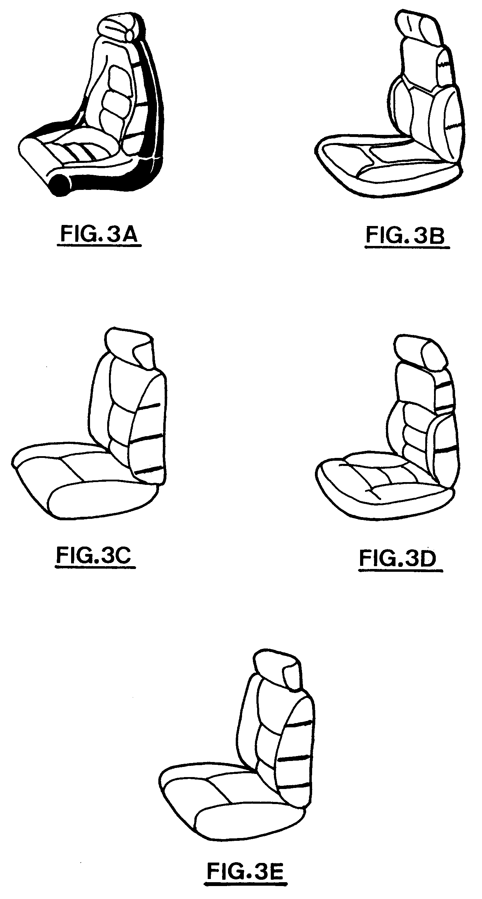

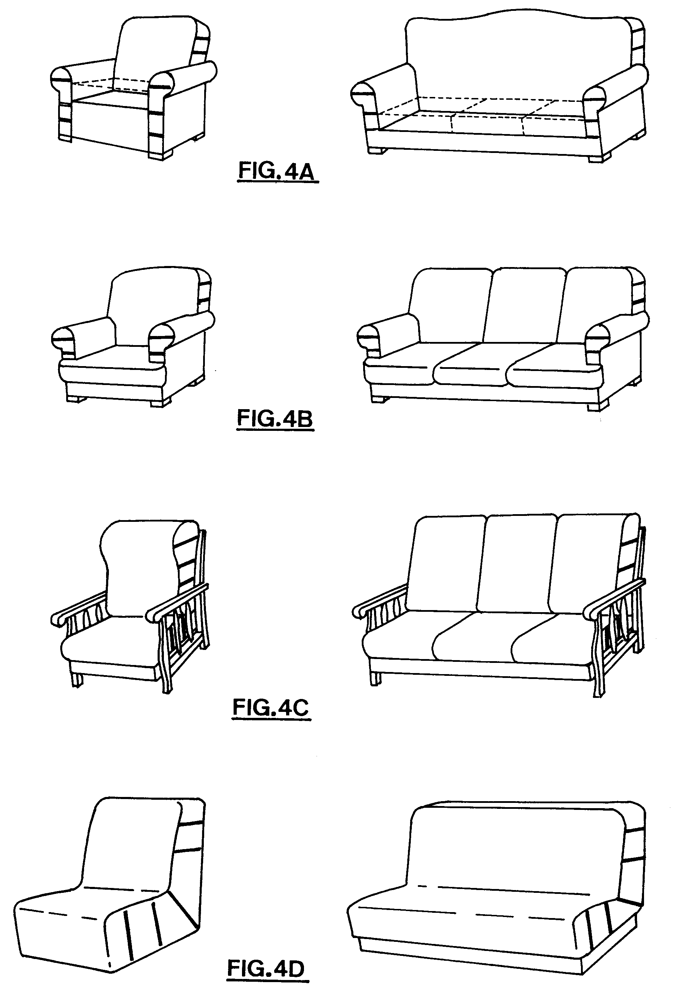

Les figures 3A à 3E montrent schématiquement des sièges avant d'automobiles recouverts (dossier) d'une housse selon l'invention. A cet égard, il y a lieu de noter que les fronces sont disposées sur les faces appelées frontales pour les sièges des figures 4A et 4B, alors que les fronces sont disposées sur les faces latérales pour les autres sièges (ameublement et véhicule). La notion de "latéral et frontal" fait ainsi référence à la dimension dans le plan de l'épaisseur du siège, et plus précisément du dossier, de l'assise et de l'accoudoir.

L'invention n'est pas limitée aux sièges d'automobiles, mais inclut au contraire des housses destinées à l'ameublement, comme montré sur les figures 4A à 4D représentant de façon schématique, en vue perspective, différents modèles de fauteuil et canapé associé, recouverts d'une housse selon l'invention. A noter que les housses recouvrant les accoudoirs portent des fronces élastiques sur la partie frontale dudit accoudoir.

## Revendications

**1 -** Housse en tissu pour siège (1) de véhicule automobile, en forme générale de poche rectangulaire, et du type comprenant deux panneaux parallèles (5, 6) reliés sur trois côtés, un premier côté (9) formant le fond de ladite poche, un second et troisième côtés formant les deux flans latéraux (7, 8) de la housse, le quatrième côté définissant une ouverture (10) par laquelle la housse est susceptible d'être enfilée sur le siège, caractérisée en ce que ledit tissu présente des propriétés élastiques réduites et en ce qu'elle est pourvue de moyens élastiques (11, 12, 13) de fronçage au niveau desdits flancs latéraux (7, 8).

**2 -** Housse selon la revendication 1, caractérisée en ce que ledit tissu présente des caractéristiques d'élasticité sensiblement nulles.

**3 -** Housse selon l'une. des revendications 1 ou 2, caractérisée en ce que lesdits moyens élastiques comprennent au moins deux bandes élastiques parallèles et transversales à la direction générale de ladite ouverture (10).

**4 -** Housse selon la revendication 3, caractérisée en ce qu'elle comporte une pluralité de bandes élastiques régulièrement espacées le long de chaque flanc.

**5 -** Housse selon l'une des revendications 3 ou 4, caractérisée en ce que chaque bande élastique a une longueur telle que dans son étirement maximum, la bande présente une longueur correspondant à la taxe maximale du siège sur lequel la housse est destinée à être enfilée.

**6 -** Housse selon l'une des revendications 3 à 5, caractérisée en ce que lesdites bandes élastiques sont associées à un fronçage du tissu.
